# EUROPEAN PATENT APPLICATION

(11) **EP 3 032 781 A1**
(43) Date of publication of application: **15.06.2016**
(21) Application number: 14307006.8
(22) Date of filing: 11.12.2014
(51) Int. Cl.: H04L 12/721

(54) **Transmission of coherent data flow within packet-switched network**

(71) Applicant: ALCATEL LUCENT, 92100 Boulogne-Billancourt (FR)
(72) Inventor: Leclerc, Brice, 91620 Nozay (FR); Marce, Olivier, 91620 Nozay (FR)
(74) Representative: Novagraaf Technologies

(57) **Abstract**

Method for emitting a datagram (D) at an emitting node (N₁) to a receiving node (N₄), through a packet-switched network, said datagram being generated by an application (A) executing on said emitting node, comprising:
- determining an emission time (tₑ) corresponding to available windows (t₂ - t₃) of the forwarding resources of each nodes (N1, N2, N3, N4) of a predetermined path (N₁, N₂, N₃, N₄) between said emitting node and said receiving node; and,
- generating said datagram (D) by said application for emission by the forwarding resources of said emitting node at said emission time (tₑ).

## Description

### FIELD OF THE INVENTION

The invention relates to the technical field of packet-switched communication networks and more precisely to the emission of datagrams through such networks.

In particular, it concerns the determination of the emission time of the datagrams, so as to avoid any transmission latency.

### BACKGROUND OF THE INVENTION

Packed-switched communication network are used for applications which require higher and higher quality of service (QoS) and quality of the user experience. These applications comprise video streaming or video-on-demand (VoD), video-conferencing, gaming, etc.

From a technical perspective, these applications require that the data are transmitted from the source to the recipient with the smallest transmission time (or "latency") and with good QoS characteristics (jitter, packet loss...), whereas the quantity of data to be transmitted increases year after year both because of the increasing need for quality (high definition videos, etc.) and because of the increasing number of people connected to communication networks.

Accordingly, many efforts have been undertaken in the recent years for increasing the bandwidth of the communication network. In 15 years, it is said that the overall bandwidth has been increased by around 1000 on access, wireless and core networks.

Nonetheless, the end-to-end latency did not follow the same improvement.

Some applications are not very sensitive to latency. For instance, for applications like video streaming or large file downloading, the bandwidth is the major factor but they can suffer some end-to-end delay without QoS and user experience impacts.

However, some applications are on the contrary very sensible to latency. This is notably the case for applications implying interactivity like online gaming, remote controlling, high-frequency computing etc. For such applications, the end-to-end transmission time is the crucial factor, with a direct and important impact on QoS and user experience.

Therefore, the applications requiring interactivity or, more generally, requiring low latency, face difficulties to be deployed in good conditions. Some ad-hoc solutions (e.g. adapted for a given type of application) are sometimes elaborated but they cannot be generalized to other applications and are not sufficient in terms of latency reduction.

For example, when it comes to wireless technology, it appears that collaborative MIMO (CoMP, for "collaborative Multipoint") requires latency less than 1 ms. However, with regular IP-based networking mechanisms, going below a few milliseconds is challenging. Ad-hoc solutions where the collaborating base stations form a point-to-point mesh connected by fiber are not suitable for a large-scale deployment: this would require having fiber installed between all pair of nodes. Moreover, this would prevent any evolution of the network topology.

### SUMMARY OF THE INVENTION

The object of the present invention is to alleviate at least partly the above mentioned drawbacks.

This object is achieved with a method for emitting a datagram at an emitting node to a receiving node through a packet-switched network, said datagram being generated by an application executing on said emitting node, comprising:
determining an emission time corresponding to available windows of the forwarding resources of each nodes of a predetermined path between said emitting node and said receiving node; and,
generating said datagram by said application for emission by the forwarding resources of said emitting node at said emission time.

Preferred embodiments comprise one or more of the following features, which can be taken separately or together, either in partial combination or in full combination:
- the method comprises the determination of a processing duration for said application to perform a treatment for generating said datagram; and triggering said treatment at a time depending on said emission time and said processing duration;
- said application is a media acquisition application, and wherein said triggering consists in starting acquiring a media;
- said emission time is determined by the reception of time information from said nodes, by a signaling message;
- said emission time is determined according to temporal law, and wherein the forwarding resources of said nodes are made available by a reservation message sent by said emitting node;
- said application forwards data coming from another network, wherein transmission is performed according to discrete time slots, and wherein said emission time is determined according to scheduled reception date of data to be forwarded;
- said application is in charge to forward data to another network, wherein transmission is performed according to discrete time slots, and wherein said emission time is determined according to available windows.

Another aspect of the invention concerns a computer program product comprising computer-executable instructions for performing the method as previously described, when run onto a data processing unit.

Another aspect of the invention concerns an emitting node having a software layer for executing an application generating at least a datagram, and forwarding resources to emit said datagram to a receiving node through a packet-switched network, characterized in that said emitting node is adapted for determining a emission time corresponding to available windows of the forwarding resources of each nodes of a predetermined path between said emitting node and said receiving node; and, in that said application is adapted for generating said datagram for emission by the forwarding resources of said emitting node at said emission time.

Preferred embodiments comprise one or more of the following features, which can be taken separately or together, either in partial combination or in full combination.
- the emitting node is adapted to determine a processing duration for said application to perform a treatment for generating said datagram; and for triggering said treatment at a time depending on said emission time and said processing duration.
- said emission time is determined by the reception of time information from said nodes, by a signaling message.

Another aspect of the invention concerns a communication network comprising at least an emission node as previously defined and another node among said nodes comprising forwarding resource and means for detecting that a received datagram (D) belongs to a coherent flow and to forward it during its respective available window without any contention.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a very simplified example of a packet-based communication network.
Fig. 2 shows an example of available windows for nodes of a path between an emitting node and a receiving node.
FIG. 3 shows an example of determination of a triggering time according to an embodiment of the invention
FIGS. 4 and 5 show two embodiments for the determination of the emission time
FIG. 6 shows the contention of a node as a function of its load, in various situations.

### DETAILED DESCRIPTION OF THE INVENTION

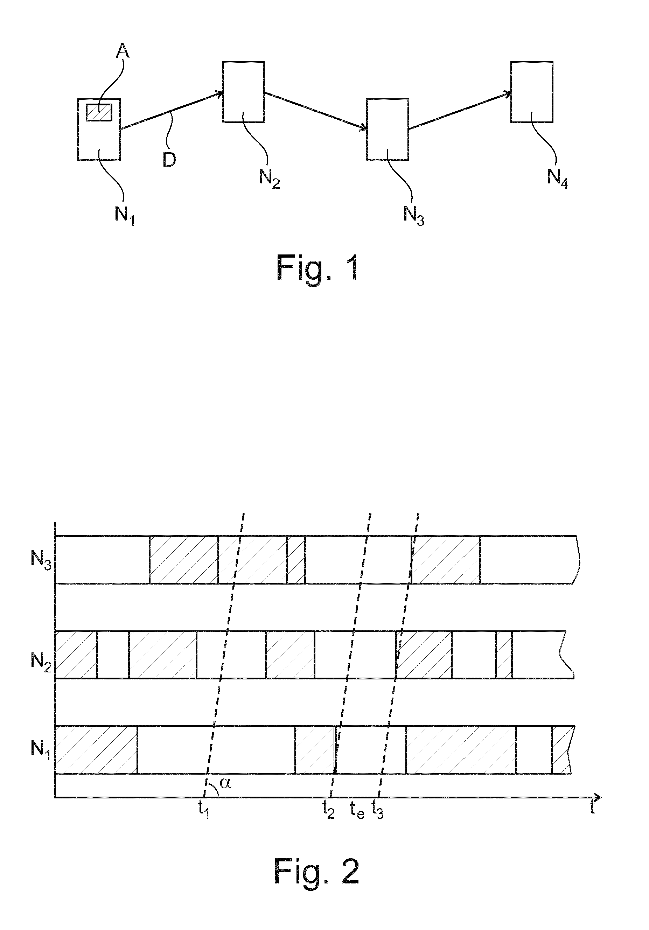

A packet-based communication network is depicted in FIG. 1. Its topology is very simplified for the purpose of clarity of the explanations.

This packet-based communication comprise nodes N₁, N₂, N₃, N₄, i.e. network equipments through which are transmitted datagrams between an emitter or source and a receiver or recipient. The emitter N₁ and the receiver N₄ can be considered as nodes also.

The expression "datagram" means here any atomic data transmission unit, or Protocol Data Unit (PDU), according to any layer, except the physical layer (layer 1). It comprises for instance IP packets (layer 3), frames (layer 2), TCP segments or UDP datagrams (layer 4), etc.

At least the emitting node N₁ comprises a protocol stack associated with the OSI layers, L1, L2, L3...L7, wherein the layer L7 represents the application layer. Typically, an application A (on layer L7) represents the source of a dataflow which is transmitted by the protocol stack PS for transmission towards a recipient N₄, through the communication network.

The transmission is typically performed along a predetermined path. In the example depicted on FIG. 1, this predetermined path is made of nodes N₁, N₂, N₃, N₄. The way the data flow, made of datagrams, is actually transmitted and routed through a path made of nodes is out of the scope of the invention, and, consequently, not further detailed. The way the path is predetermined is not detailed neither, for the same reasons.

The time for transmitting a datagram from the application A to the recipient N₄ (and, more precisely, to an application running on the node N₄ which can be the actual recipient) depends on many factors.

The physical links between the nodes as well as the transmission technology for actually transmitting data over these links are parts of these factors. These considerations concern the layer 1 of the OSI model.

However, the end-to-end transmission time, or latency, has also causes at upper layers of the OSI model. These causes relate to various processing undertaken by the nodes to handle the datagrams.

Among these causes, major ones are collisions of datagrams at one node and buffering. Indeed, as a node may receive data flows from several sources, it implements buffering mechanisms to forward incoming messages into queues in order to manage asynchronously incoming data flows.

Accordingly, many solutions have been designed to react on collisions so as to reduce the buffering and decrease the latency due to multiplexing of forwarded datagrams inside network nodes.

Among these solutions, we can cite:

* Differentiated Services "Expedited Forwarding", as described by RFC 3246 of the IETF (Internet Engineering Task Force)

DiffServ "Expedited Forwarding" (EF) intends to provide low delay, low jitter and low loss of services by ensuring that the EF aggregates are served at a certain configured rate.

However this mechanism does not prevent congestion and then does not prevent a given datagram from being delayed: an "Expedited Forwarding" datagram is buffered before being forwarded in case the node has already EF datagrams waiting to be transmitted.

Moreover, the applicant considers that the low loss feature is too stringent: Some applications, like interactive applications, do not need the same tradeoff between reliability and latency. For such applications, datagrams can be dropped without jeopardizing the QoS and user experience.

* Another solution is called "Explicit Congestion Notification" and is defined by e.g. RFC 3168 of the IETF. This solution relies on the detection of a congestion situation based on drop decisions taken by a node, and it aims at avoiding that the transport and the application suffer too much losses.

However, such a solution is only a reaction to correct a congestion situation, and does not allow limiting the latency.

* Another solution is described by the 802.1 Qav (Audio-video bridging) and 802.1 Qat (Admission control) IEEE standards. It aims at reliably deliver data with a deterministic low latency and low jitter, by reserving some bandwidth.

However, bandwidth reservation ensures a deterministic average latency but not a minimal latency, as it does not prevent congestion on output ports at the time a datagram arrives.

Moreover, as for the RFC 3246 solution, the low loss feature is too stringent.

* Another solution is called "Pseudo wire emulation" and is described by RFC 3985 of the IETF. It consists in emulating the essential behavior of telecommunication services over a packet-switched network. It intends in providing the minimum necessary functionality to emulate the wire with the required degree of faithfulness for the given service definition.

However, timed delivery keeps a constant phase between input and output interfaces of a node for non-continuous messages: it reduces the jitter but does not manage to achieve a minimal latency.

In other words, the solutions in the prior art try to detect congestion issue and to react upon this detection to avoid or limit the effects of congestion. For achieving this, some solutions propose an optimal use of the buffers that are used for forwarding datagrams towards an output interface.

However, at the time of congestion detection, the latency is already impacted. Furthermore, although many research works have been undertaken in this direction, no solution based on optimization of buffer usage has prove to be satisfactory in terms of actual latency reduction.

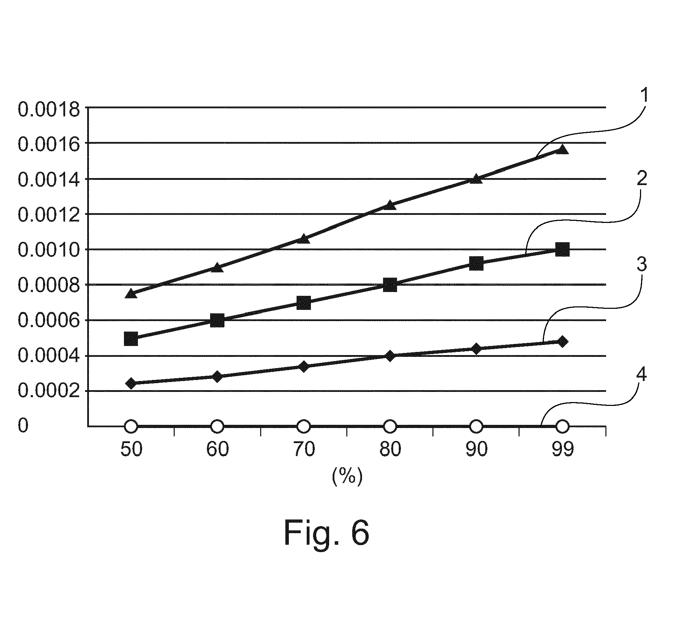

FIG. 6 shows the results of a simulation. It evaluates the impact of EF flows aggregations coming from 10 input ports toward a given output port in a network equipment when the distribution of the flows between "Expedited Forwarding" (EF) and regular "Best Effort" (BF) is modified for a given traffic. The contention delay for a node (i.e. the latency for one node) is depicted in seconds on a vertical axis as a function of the load of the node, expressed in percentage.

The curves 1, 2, 3 depict the use of the DiffServ EF mechanism with 3 different mixes between "Expedited Forwarding" (EF) and regular "Best Effort" (BF):
Curve 1: EF = 30% and BF = 70%
Curve 2: EF = 20% and BF = 80%
Curve 3: EF = 10% and BF = 90%

It shows that Expedited Forwarding does not solve the contention issue.

However, the curve 4, representing the latency curve for a node according to the invention, shows no queuing latency, regardless of the load of this node.

For achieving this, the invention is based on the idea of avoiding the use of buffering of the datagrams inside the network node for collision avoidance. In other words, it avoids the queuing of datagrams. Accordingly, the invention is based on a break-through, compared with the prior art solutions trying to optimize the buffer usage.

The node according to the invention can avoid buffering of the incoming datagrams thanks to a new device and a new method for forwarding them, avoiding also any collisions at output interfaces.

The principle of the invention can be understood with the help of the example depicted in FIG. 2. This example relies on the architecture depicted on FIG. 1. It should be understood, however, that this is just an example of architecture, and that the path between the emitting node N₁ and the receiving node N4 can be more complex than in this example. Plus, the emitting and receiving nodes can be terminals, but also any nodes beholding to a communication network.

The invention lies in a method for emitting a datagram D at this emitting node N₁ to a receiving node N₄. As previously said, this datagram is generated by the application A executing on the emitting node, and it can be part of a data stream made of several datagrams.

According to the invention, the method comprises the determination of an emission time tₑ which corresponds to the available windows of the forwarding resources of each nodes of the path between the emitting and receiving node.

The first step consists in predetermining this path. This step is performed according to routing techniques well known in the art, and, for this reason, it will not be deeply described here.

Once this path determined, the emitting node N₁ should determine the availability of the forwarding resources of each nodes of the path. The path includes the emitting node N₁ itself, since its forwarding resources are impacted in the transmission of the datagram D from end to end. On the contrary, the receiving node N₄ is to be excluded of the predetermined path, since its forwarding resources are not impacted in the transmission of the datagram D. This is based on the fact that the underlying routing mechanism is based on output ports, and the path determined at the emitting node N₁ by the routing algorithms comprise typically the output port of N₁, N₂ and N₃.

Accordingly, the forwarding resources to be considered are those of N₁, N₂, N₃.

However, the node N4 can be included into the determination of an emission time tₑ, so as to take into account the resources of N4, other than forwarding ones. This is the case for example to have the node N4 process the packet as soon as it is received. In this case, the processing resources availability of N4 will be included into the determination of tₑ.

FIG. 2 shows the availability of the forwarding resources of the nodes N₁, N₂, N₃ along the time. The hashed zones correspond to non availability of the corresponding forwarding resources, i.e. time periods during which the forwarding resources are reserved or busy transmitting other datagrams. The blank zones correspond, on the contrary, to time periods during which the corresponding forwarding resources are not assigned to any particular transmission tasks. They correspond thus to available windows during which any datagram D can be transmitted immediately, without any delay, and without going through any contention buffer.

For instance, the time t₁ corresponds to an available window of the forwarding resources for the nodes N₁ and N₂, but not of the node N₃. Therefore, the time t₁ does not correspond to an eligible available window for each node N₁, N₂, N₃, N₄ of the path.

The time window t₁-t₃ however corresponds to an available window of the forwarding resources of each of the nodes of the path.

In fact, it corresponds to the maximal available window, i.e. the time t₂ and t₃ are selected so that times out of the interval [t₂, t₃] correspond to unavailability of at least one forwarding resources. According to the invention, it is not necessary to determine the maximal available window, neither all the available windows: the determination of any available window (i.e. included into this maximal available window) is sufficient, but the wider it is, the more flexibility is granted to the method of the invention.

It should be further noted that the dotted lines corresponding to the times t₁, t₂ and t₃ are oblique due to the delays at each node due to the transmission time between nodes. The angle α corresponds directly to the transmission delay of the datagram between two subsequent nodes. This angle is depicted as constant for the intelligibility of the figure, but in practice this angle α is not constant for each pair of subsequent nodes, since the distance between them is in general not constant.

The emission time tₑ is determined so as to correspond to this available window. The determination may take into account the transmission duration of the datagram, according to its size, so that the end of the transmission falls also inside the available window [t₂, t₃]

Once the emission time tₑ is determined, the application A executing on the emitting node N₁ can generate the datagram D, so that the forwarding resources of the emitting node can emit them at this emission time tₑ.

As a consequence, the datagram D is transmitted along the path without any delay due to contention buffer, since at each node, the forwarding resources are available for immediate emission.

According to an embodiment of the invention, the contention buffer can be bypassed, to optimize further the traversal time, and the datagram D can be directly transmitted to the corresponding output port upon its reception. This embodiment is possible if the datagram D can be determined by the node as requiring such an immediate treatment. This determination is possible especially when the datagram beholds to a dataflow already known as requiring this behavior.

In such case, even, the forwarding resource can be explicitly or implicitly reserved, locally, so as to keep the correspond windows available for the datagrams of this dataflow.

We will see later how the node can concretely determine the datagrams which should be handled for immediate emission and how the emitting node can determine the available windows [t₂, t₃]

Knowing the emission time tₑ, the application can then determine a time at which the treatment for generating the datagram should be triggered. The nature of this treatment depends on the application A.

Examples of treatment consist in formatting image or video data into frames compliant with a given standard, compressing or encrypting data, etc. Furthermore, the treatment comprises the encapsulation of the data into the actual format of the datagram D.

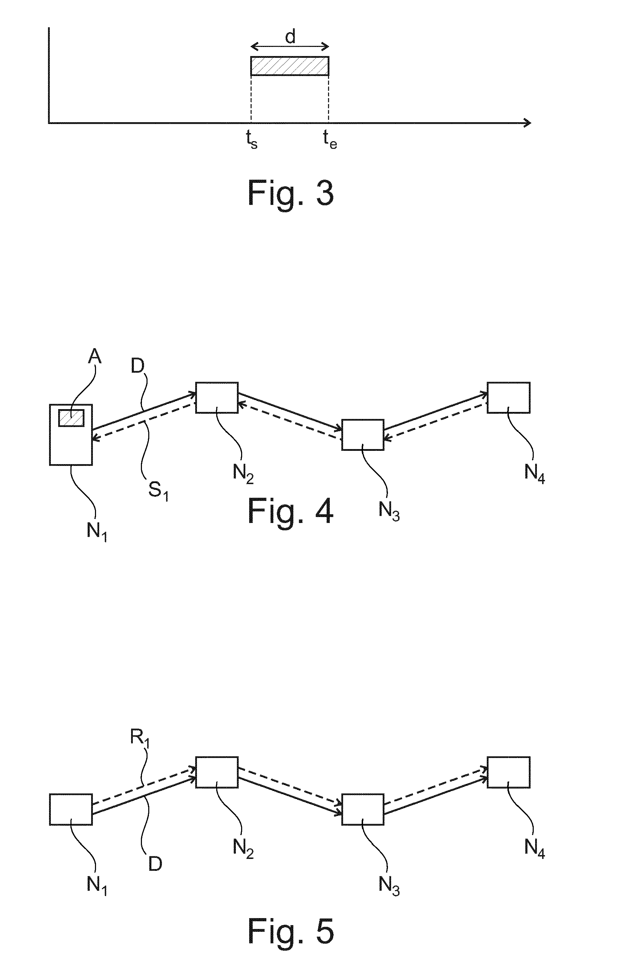

FIG. 3 shows simply how the triggering time tₛ can be determined, by knowing the emission time tₑ and by knowing or estimating the processing duration d : tₛ=tₑ-d.

Once this time tₛ is determined, the application A can trigger the start of the processing at this time tₛ, so that the datagram D can be ready for actual emission on the network media at the emission time tₑ.

In the situation where the application A is a media acquisition application, this triggering may consist in starting acquiring the media. For example, it may be the start of the sampling of an image or video frame by a web-camera controlled by the application A.

Another type of applications A can be a clock application, for instance compliant with the IEEE 1588 protocol known as "Precision Time Protocol" (PTP). This protocol aims at synchronizing clocks of distant nodes by exchanging datagrams through the network. The delay for the clocks to converge as well as the accuracy depends on the efficiency of the synchronization provided by PTP. This efficiency strongly depends on the jitter on the communication network.

By making use of the available windows of the forwarding resources of each node on the path between the emitting and receiving nodes, i.e. two endpoints of the PTP synchronization, the contention and, consequently, the jitter are reduced to zero.

The overall performance of PTP can then reach high level. It is then possible to share an expensive master clock through a Wide-Area Network (WAN) and to serve more clients, even in a loaded network.

The clock should makes its sample at a time tₛ determined according to the necessary time d to actually make this sample so as to emit the PTP datagram at the determined emission time tₑ.

Another type of applications A can be a TCP (Transport Control Protocol) application.

In the art, the latency prevents TCP to reach the speed limit of the underlying technology. For example, a 45 ms latency in the communication network limits the throughput of a TCP flow with a 1 MB window to 90 Mbps, whatever the bandwidth of the network that carries the data. This limitation is due to the reliability and congestion avoidance mechanisms provided by TCP, that requires regular acknowledgment of transmitted datagrams from the recipient.

In order to reduce the latency suffered by the TCP acknowledgements and consequently increase the TCP throughput, the recipient can send these acknowledgements at emission time tₑ corresponding to available windows of the forwarding resources of the nodes of the path "backward", i.e. in the direction of the acknowledgements, which is reverse to the direction of the payload dataflow. In a TCP communication, both ends can receive TCP dataflow from the other end, and, as a response, send back an acknowledgement. The end node should determine the available windows in relation with the acknowledgment flow, i.e. from its point of view (the available windows are, in general, not symmetric according to the direction of the flow).

In addition to reduction of delay between data transmission and acknowledgement reception, the acknowledgements do not suffer any packet loss anymore, and the standard TCP congestion control mechanism does not work as usual: the sender throughput is not limited by lack of acknowledgments due to packet loss but by the available windows of the forwarding resources of the nodes of the path. Knowing in advance these available windows, TCP knows a priori the network available bandwidth. It can thus start at full speed and compute a priori how to share the available windows (i.e. the bandwidth) with other sources.

The available windows and the emission time tₑ can be determined by the emitting nodes N₁ by different ways.

For instance, the emitting node could be knowledgeable of the emission and reception time of all traffic flowing through its forwarding resources, so that it can easily determine the remaining time periods, which correspond to available windows.

It can for instance be the case for Node B in a LTE (Long Term Evolution) network.

For the uplink case, because it grants accesses to the radio interface, the eNodeB can be aware of the time when datagrams are received from the User Equipments (UEs). Then, to forward data on the backhaul, the eNodeB computes the more appropriate temporal law that complies with the dates data are received from UEs, taking into account the backhaul network availability windows. Reciprocally, eNodeB takes into account the backhaul network availability windows to grant accesses to UEs. Globally, eNodeB computes a tradeoff between accesses grants on radio and temporal law computation, targeting to reduce latency.

For the downlink case, eNodeB manages the scheduling of the transmission of datagrams on the radio media. As the transmission is performed according to discrete time slots, the datagrams can be sent only at some discrete time slots. Then the eNodeB can compute a temporal law that complies at same time with these time slots and with the available windows, so as to forward data from the User Equipments without any contention.

Another possibility consists in designing a temporal law, at the emitting node N₁. This temporal law can be a periodicity (i.e. a streaming of one datagram every x milliseconds), but other temporal law can be designed. It defines a "coherent flow", i.e. a set of datagrams obeying to a temporal law.

This temporal law can be designed by the emitting node and then transmitted, before the actual transmission of the datagram D, to the other nodes N₂, N₃, N₄ by a reservation message r₁ as depicted on FIG. 5.

On reception of the reservation message r₁, the node on the path can make their forwarding resources available for the subsequent datagram D. The use of a temporal law allows reserving the forwarding resources for more than one datagram, but for several datagrams forming a coherent flow: each node on the path, knowing the temporal law, can determining the time windows it should make available for each datagram of the coherent flow.

Another solution is depicted by FIG. 4 and consists for the emitting node in determining the emission time tₑ by the reception of time information from other nodes of the path. This time information is contained by the signaling message s₁.

Each node N₂, N₃, N₄ can send an individual signaling message containing time information related to itself. In the case, the emitting node N₁ is in charge of compiling all time information to determine the appropriate emission time tₑ.

Alternatively, the signaling message s₁ is sent back by the receiving node N₄ and then hops backward from node to previous node until the emitting node N₁. In this case, the signaling message s₁ may be refined or enriched by each node along the path, so that the emitting node N₁ get the overall picture enabling it to determine an appropriate emission time tₑ.

This time information can contain data defining the time windows of the forwarding resources of the respective nodes.

According to an embodiment of the invention, the emission time tₑ is set according to a temporal law, and the time information contained in the signaling message s₁ is used in case of deviation of one of the node from the temporal law.

From the perspective of the other node of the path, i.e. nodes N₂, N₃, N₄, they can assume that they will receive the datagram D according to a temporal law known in advance and associated with a coherent flow.

According to the principles explained previously, these datagrams are received during an available window of the forwarding resources. Then the nodes are designed so that the datagram is immediately forwarded to the next node on the path, without any contention. It means that the datagrams D is not queued in any contention handling buffer, since the output interfaces of the nodes are already reserved for it at the date of reception. In other words, as belonging to a coherent flow, the received datagram is emitted at output interface at a date "known" before the arrival of the datagram on the input interface.

Processing the datagram and transmitting physically it from one interface to another interface takes the same time regardless of whether the node is loaded or not. This delay can be measured during a setup phase of the system and taken into account in the further treatments performed by the network nodes.

When the datagram is forwarded to the output interface of the forwarding resources for immediate transmission, two situations can occur:
- Either the forwarding resource is available (i.e. normal situation); and then the datagram is actually and immediately emitted.
- Or the output interface is not available, because other datagrams are under transmission.

In this latter case, a reservation conflict is detected, i.e. the date for the emission of this datagram is not appropriate according to the conditions of the forwarding resource. As the delay between the reception date and the emission date of this datagram is known for certain (as it only depends on internal and constant electronic latency), it then means that the reception date is not appropriate as it corresponds to an unavailable time window for the output interface of the forwarding resource.

According to an embodiment of the invention, a signaling message is sent back to the node which has emitted this datagram. Reverting back to FIG. 4, if a reservation conflict is detected at node N₃, a signaling message will be sent back to the node N₂, which is the previous one in the path linking the source application A to the recipient N₄.

Another type of reservation conflict may happen even if the output interface is available. It is the case when the node is knowledgeable of the temporal law associated with the coherent flow in which the received datagram belongs and when the reception date differs substantially from the conditions set by this temporal law.

A temporal law can be associated to a coherent flow in various ways, as already explained. Furthermore:
- it can be provisioned by an entity exterior to the node. It can be provisioned by out-of-band signaling from entities like a network management system; or by in-band signaling.
- it can be determined by the node itself by analyzing the incoming datagrams and by performing correlations with them, so as to determine patterns. This process can be performed at the same time at the detection of the coherent flows, so that both the detection and the temporal law are determined altogether.
- etc.

As it has been said previously, the temporal law can be periodic (one message every x milliseconds) but many other patterns can be designed or detected. In particular, in the case of aggregated coherent flows, the temporal law can be the aggregation of several signals with different characteristics (e.g. different periodicity) resulting in more complex temporal patterns.

It can be noted here that in the case of a new coherent flow, a node can need several datagrams before determining the temporal law, in the situation it is not known by signaling means.

From the temporal law, the node can determine when the next datagram of the associated coherent flow is expected to be received. It can reserve a time window in advance on the output interface according to this temporal law. Accordingly, time windows can be reserved not only for a received datagram, but also for the expected subsequent datagram belonging to the same coherent flow (and obeying to the same temporal law). In other words, the forwarding resource, including the output interface, is reserved for a datagram even before this datagram is received.

This is the reason why the node according to this embodiment of the invention does not need buffering datagrams to solve contention anymore and why the latency due to contention is cancelled.

In this embodiment, it should be noted that no explicit reservation is performed from outside (like e.g. with RSVP protocols and the like).

The datagram is forwarded to the output interface in order to be emitted during the time interval reserved according to this temporal law.

To be precise, due to the invention, a small deviation is implied in the definition of a "datagram": according to the RFC 1594 of the IETF (Internet Engineering Task Force), a datagram is "A self-contained, independent entity of data carrying sufficient information to be routed from the source to the destination computer without reliance on earlier exchanges between this source and destination computer and the transporting network.".

Due to the invention, there exists a reliance on earlier exchanges. In fact, the invention can be considered as a method and a device for enabling time-based forwarding (in contrast with address-based forwarding).

Accordingly, the node N₂, N₃, N₄ can easily determine whether an incoming datagram from a given coherent flow complies with the temporal law associated with this coherent flow. It can then determine any deviation of a coherent flow with its associated temporal law.

Such a deviation may be caused by a shift between clocks. Indeed, each nodes of a communication network comprise its own clock. In general, clocks of two given nodes of a network shift relatively to each other. Shift between two clocks may be characterized by time, phase but also frequency.

According to an embodiment of the invention, some deviation can be considered as minor, and should not imply any corrective actions.

The node can be adapted to determine the compliance of the reception date of a datagram to the temporal law with some flexibility. For instance, a difference can be determined between the reception date and an "expected reception date", directly derived from the temporal law. If this difference is below a threshold, no corrective action is triggered. The datagram is handled as if it was received precisely according to the temporal law.

In the contrary, a corrective action should be triggered. Important shifts may indeed cause several issues, including the datagram being considered as not belonging to the same coherent flow anymore. Furthermore, the shift may imply the reception of the datagram at a date when the output interface is not available, and may impact the overall behavior of the invention.

This corrective action comprises sending a signaling message back to the node which has emitted this datagram. As previously explained in relation with the reservation conflict implied by having an output interface unavailable at the required time, this signaling message is sent back to the immediate previous node in the path of the coherent flow.

In both cases, the signaling message aims at modifying the reception date of the subsequent datagrams beholding to the same coherent flow. Accordingly, it contains time information adapted for enabling the previous network node to modify its emission date tₑ, which directly corresponds to a modification of the reception date. This enables a compensation of the reservation conflict.

In case of a deviation from the temporal law, the time difference between the actual reception date and the expected reception date can serve as basis to determine the time information: it may be sufficient to set the time information at a value such as to compensate the time different, so that the next datagram of the coherent flow will be precisely aligned on the temporal law.

In practical, the temporal law can indicate the time difference (or its opposite), i.e. a relative value.

According to an embodiment of the invention, in case of unavailability of the output interface at the reserved time window, a new time window can be determined, during which the forwarding resource (including the output interface) will be available for the datagram.

The node can determine from the temporal laws stored in its memory, the overall availability of the forwarding resource. It can then deduce from this knowledge at which dates the output will be available for emitting the datagram. The date can be selected as the starting point of a time interval fitting this datagram, according to its size (and e.g. local parameters like the bitrate at the output interface, etc.),

This date can be communicated to the previous node by the signaling message. Here again, the time information can be relative to the date of arrival of the packets of the coherent flow.

According to another embodiment of the invention, a different temporal law can be designed by the node: the modification does not only impact a shift to a new date, but also the whole temporal patterns of the coherent flow can be modified: periodicity, etc.

Accordingly, the following datagrams of the coherent flow will be sent according to the modified temporal law (or simply with the same temporal pattern but shifted in time). They will be sent to be received on the output interface at a date where the output interface is available (i.e. during an available window) and will be actually forwarded without any latency due to contention.

In some cases, the output interface may not have any availability anymore, or, it may not have any availability dedicated to coherent flows. Indeed, according to an embodiment of the invention, it is possible to reserve a certain amount of resources dedicated to coherent flows; the rest being available for traffic with for example other Integrated or Differentiated Service class (IntServ/DiffServ).

In such situation, the datagram (and the associated coherent flow) can be downgraded to a best-effort behavior. This downgrading does not presume for the treatment performed by next nodes downstream on the path. For instance, some traffic shaping mechanisms can be implemented, so that "downgraded" datagrams can be detected as beholding to a coherent flow at such a downstream node.

In addition to the transmission of the signaling message, other actions are to be undertaken by the node, notably regarding the received datagram.

Especially in the case the datagram is received at a date when the output interface is unavailable, the datagram can be dropped. Such a solution is acceptable for some applications, like video conference, etc., and, for the overall behavior of the network, it is considered more efficient to allow a certain amount of message drops than to buffer them within the node, thus implying latency.

Another solution can be to transmit it. It can then be buffered according to legacy mechanism. If the datagram is tagged as belonging to a coherent flow, the tag can be removed. Another tag may be added for indicating it should be handled according to some Integrated or Differentiated Service class for instance.

When a reservation conflict occurs in a given node, a signaling message is sent to the previous node for modifying the reception date of the subsequent datagrams of the coherent flow. Such a modification can have some impacts on the conditions of this previous node: notably, if this node is according to this embodiment of the invention, this datagram is not buffered for contention purpose and, for it also, any change in its emission time implies a change in its reception date. Accordingly, the previous node also should send back a signaling message to its own previous node.

In the example of FIG. 4, a signaling message is sent from node N₄ to node N₃, triggering a signaling message sent from node N₃ to node N₂, where it in turns trigger the signaling message s_{c} sent from node N₂ to node N₁.

At node N₁, which is the source of the coherent flow and implement the source application A, the signaling message may trigger sending an internal signaling message through the protocol stack up to the application A, which is deployed at the application layer.

The application can then adapt its transmission configuration according to the time information contained in the signaling message, as it has been explained previously

According to the invention and its embodiments, any reservation conflict at a given node of the transmission path is compensated upstream from neighbor to neighbor along the transmission path.

A compensation at a given node may imply a subsequent reservation conflict at an upstream node: for example, modifying the emission date can result in one or two nodes upstream to an emission at a date the output is unavailable. But this new reservation conflict can be also handled according to the invention, so that it can be corrected. In other words, an iterative process starts resulting in the one-by-one compensations of the reservation conflicts.

At the end, any reservation conflict can be corrected, and the coherent flows can be transmitted from end to end without contention in the traversed network nodes.

This is because at each node of the path, the output interfaces are reserved according to the temporal laws. The nodes do not need anymore to actually receive a datagram to reserve resources of the output interface. Accordingly the invention prevents to queue the received datagram to solve contention and the latency due to contention is cancelled as shown at FIG. 6.

The invention has been described with reference to preferred embodiments. However, many variations are possible within the scope of the invention.

## Claims

1. Method for emitting a datagram (D) at an emitting node (N₁) to a receiving node (N₄), through a packet-switched network, said datagram being generated by an application (A) executing on said emitting node, comprising:
- determining an emission time (tₑ) corresponding to available windows (t₂ - t₃) of the forwarding resources of each nodes (N1, N2, N3, N4) of a predetermined path (N₁, N₂, N₃, N₄) between said emitting node and said receiving node; and,
- generating said datagram (D) by said application for emission by the forwarding resources of said emitting node at said emission time (tₑ).

2. Method according to the previous claim, comprising the determination of a processing duration for said application to perform a treatment for generating said datagram; and triggering said treatment at a time depending on said emission time and said processing duration.

3. Method according to said previous claim, wherein said application is a media acquisition application, and wherein said triggering consists in starting acquiring a media.

4. Method according to any of the previous claims, wherein said emission time (tₑ) is determined by the reception of time information from said nodes, by a signaling message (s₁).

5. Method according to any of the claims 1 to 3, wherein said emission time (tₑ) is determined according to temporal law, and wherein the forwarding resources of said nodes are made available by a reservation message (r₁) sent by said emitting node (N₁).

6. Method according to any of the claims 1 to 3, wherein said application forwards datagrams coming from another network, wherein transmission is performed according to discrete time slots, and wherein said emission time is determined according to scheduled reception date of data to be forwarded.

7. Method according to any of the claims 1 to 3, wherein said application forwards datagrams to another network, wherein transmission is performed according to discrete time slots, and wherein said emission time is determined according to available time slots.

8. Computer program product comprising computer-executable instructions for performing the method according to any of the previous claims, when run onto a data processing unit.

9. Emitting node (N₁) having a software layer for executing an application (A) generating at least a datagram (D), and forwarding resources to emit said datagram to a receiving node (N₄) through a packet-switched network, **characterized in that** said emitting node is adapted for determining a emission time (tₑ) corresponding to available windows (t₂ - t₃) of the forwarding resources of each nodes (N₁, N₂, N₃, N₄) of a predetermined path between said emitting node and said receiving node; and, **in that** said application is adapted for generating said datagram for emission by the forwarding resources of said emitting node at said emission time (tₑ).

10. Emitting node according the previous claim, adapted to determine a processing duration for said application to perform a treatment for generating said datagram; and for triggering said treatment at a time depending on said emission time and said processing duration.

11. Emitting node according to any of the claims 9 or 10, wherein said emission time (tₑ) is determined by the reception of time information from said nodes, by a signaling message (s₁).

12. Communication network comprising at least an emission node (N₁) according to any of the claims 9 to 11 and another node among said nodes (N₂, N₃) comprising forwarding resource and means for detecting that a received datagram (D) belongs to a coherent flow and to forward it during its respective available window without any contention.
